# EUROPEAN PATENT SPECIFICATION

(11) **EP 1 451 788 B1**
(45) Date of publication and mention of the grant of the patent: **21.06.2006**
(21) Application number: 02803877.6
(22) Date of filing: 31.10.2002
(51) Int. Cl.: G08C 23/04, G08C 19/28

(54) **SYSTEM AND METHOD FOR REMOTE CONTROL OF IDENTICAL DEVICES**
SYSTEM UND VERFAHREN ZUR FERNBEDIENUNG IDENTISCHER EINRICHTUNGEN
SYSTEME ET PROCEDE DE TELECOMMANDE DE DISPOSITIFS IDENTIQUES

(30) Priority: 29.11.2001 EP 01204612
(43) Date of publication of application: 01.09.2004
(73) Proprietor: Koninklijke Philips Electronics N.V., 5621 BA Eindhoven (NL)
(72) Inventor: AMAND, Frank, NL-5656 AA Eindhoven (NL)
(74) Representative: Groenendaal, Antonius W. M.
(86) International application number: PCT/IB2002/004604
(87) International publication number: WO 2003/046858

(56) References cited:
- EP-A- 0 348 726
- US-A- 5 128 668
- US-A- 5 854 594

## Description

The invention relates to a system for remote control of at least two controllable devices, the system comprising a remote control device with transmitting means for communicating a user-specified command produced by the remote control device.

The invention also relates to a method of remote control of at least two controllable devices, the method comprising the step of communicating a user-specified command produced by a remote control device.

An embodiment of such a system is known from U.S. Patent 5,748, 263.

Well known remote control systems include consumer electronics products, such as a television set (TV), videocassette recorder (VCR), which are remote-controllable devices and can receive user commands produced by means of a remote control device. Sometimes, such remote control systems involve two or more controllable devices, which may be identical. When the controllable devices are situated fairly close to each other, a signal of the remote control device may reach not only the target-controllable device, but also another controllable device. Both devices will receive the signal and respond to it. This situation may occur in the showrooms of shops, exhibition pavilions, studios with professional electronics equipment, home theaters and other places with controllable devices, like TVs, VCRs, digital versatile disk (DVD) recorders, etc.

It is known from EP 0348726 to communicate to a group of apparatuses by assigning unique addresses to the apparatuses and indicating these addresses at the apparatuses themselves. Consequently, these apparatuses are unique and not identical. It is also already known from U.S. Patent 5,774, 673, and from US 5,128,668, to communicate between apparatuses with the help of using applications stored in these apparatuses. Thus, current remote control systems with a one- directional communication do not allow control of the identical remote-controllable devices without using special software, introducing any differences or hardware changes into the identical apparatuses or storing the unique preassigned addresses in said identical devices.

For many consumer electronics products, an infrared light is commonly used as a carrier for wireless communication. Thus, it is also necessary to develop a remote control system that can be adapted to operate with the infrared devices.

It is an object of the invention to provide a system for remote control of at least two controllable devices of the kind defined in the opening paragraph, which will be able to identify identical controllable devices and control them independently of each other.

The object of the invention is realized in that the system comprises a) a coding device comprising:
- receiving means for receiving the user-specified command from the remote control device, said receiving means of the coding device being arranged to communicate with transmitting means of the remote control device;
- a coding means designed to add to the user-specified command a device identifier for identification of at least one of the controllable devices;
- a transmitting means adapted to transmit the device identifier and the user- specified command; b) a decoding device comprising:

- a receiving means adapted to receive the device identifier and the user- specified command;
- a decoding means designed to extract the device identifier; to compare said extracted device identifier with a further device identifier for identification of the controllable device; to refrain from further operation with the received user-specified command if said identifiers do not match;
- transmitting means for transmitting the user-specified command to the controllable device if the identifiers match.

In this way, the system of the invention comprises the coding device and the decoding device and allows control of identical devices. It is assumed that the controllable devices could be conventional controllable devices and are not necessarily identical.

There are many possibilities for implementation of the system of the present invention. The coding and decoding devices could be designed as devices which are not dependent on the implementation of the remote control device and controllable devices. Thus, the coding device includes receiving means for obtaining the command from the remote control device and could be manufactured as a separate device. Similarly, the decoding device includes transmitting means and may be separate from the controllable device. It is also supposed that the receiving and transmitting means of the coding and decoding devices are suitable to communicate with the receiving and transmitting means of the remote control device and controllable devices.

The object of the invention is also realized in that the method of the invention comprises the further steps of
- receiving, in a coding device, the transmitted user-specified command from the remote control device;
- adding, in the coding device, to the user-specified command a device identifier for identification of at least one of the controllable devices;
- transmitting, by the coding device, the device identifier and the user-specified command;
- receiving, in a decoding device, the device identifier and the user-specified command;
- extracting, in the decoding device, the device identifier; comparing said extracted device identifier with a further device identifier for identification of the controllable device; refraining from further operation with the received user-specified command if said identifiers do not match;
- transmitting, from said decoding device, the user-specified command to the controllable device if the identifiers match.

The method of the invention describes steps of operation of the system for remote control of at least two controllable devices.

These and other aspects of the invention will be further elucidated with reference to the accompanying drawings, wherein:
Fig.1 shows an embodiment of the system and method of the present invention, block diagrams of the coding and decoding devices and a general principle of operation of said system;
Fig. 2 shows an embodiment of the system of the present invention, in which a schematic diagram of the processor that could be embedded in the coding or decoding device is shown ;
Fig. 3 shows an example, in which a schematic diagram of the remote control device and coding device with combined transmitting means is shown;
Fig. 4 shows an example, in which a schematic diagram of the controllable device and decoding device with combined receiving means is shown.

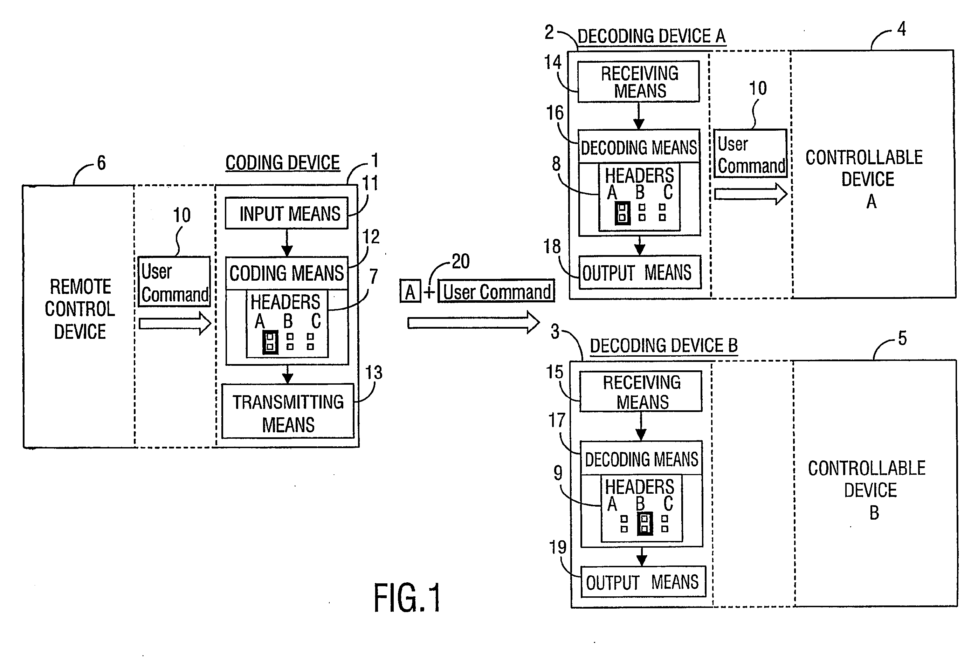

Referring now to the drawings, Fig. 1 shows an embodiment of the system and method of the present invention. The Figure shows the block diagram of the coding device 1 and the block diagram of the decoding devices 2 and 3 associated with the controllable devices 4 and 5, respectively. The method of the invention and the general operation principle of the system are also disclosed with reference to the Fig. 1.

The remote control device 6 may have a number of keys, which generally include numerical keys, function keys and means 7 for selecting a device identifier associated with the controlled device, like the controllable device 4 or 5. An extra switch on the remote control device or coding device could implement said means for selection of the device identifiers. The decoding devices 2,3 may include means 8,9 for setting further device identifiers associated with the controlled devices 4, 5.

In Fig. 1, a selection between the device identifiers A, B and C is used as an example with the aim to explain the present invention. The device identifiers could be selected independently in the coding and decoding devices. Thus, it is shown in Fig. 1 that the further device identifier A is selected in the coding device 1 and the further device identifier B is set in the decoding device 3.

The remote control device 6 produces the user-specified command 10. The coding device 1 comprises input means 11, coding means 12 and transmitting means 13. Thus, the coding device 1 may obtain the user-specified command 10 using the input means 11. Then, the coding means add to the user-specified command the selected device identifier, which can be assigned to the specific controllable device or a group of the controllable devices. The transmitting means 13 of the coding device 1 further transmit a signal 20 incorporating the user-specified command and the device identifier to be received by the decoding devices.

The decoding devices 2, 3 comprise receiving means 14, 15, decoding means 16, 17 and output means 18, 19. The user-specified command and the device identifier 20 are being received by the receiving means 14, 15 of the decoding devices 2, 3. Then the decoding means 16, 17 extract the received device identifier and compare it with the further device identifier, which identifies the associated controllable device. The decoding means refrain from further operation with the received user-specified command if said identifiers do not match. If the received device identifier and the further device identifier, which identifies the associated controllable device, do match, the output means of the decoding device further supply the received user-specified command to the associated controllable device.

As is shown in Fig. 1, the further device identifier A is set in the decoding device 2 and the further device identifier B is set in the decoding device 3. The coding device 1 transmits the user-specified command with the device identifier A. In this connection, only the controllable device 4 will receive the user-specified command 10 produced by the remote control device 6, because the further device identifier A is set in decoding device 2 but not in the decoding device 3.

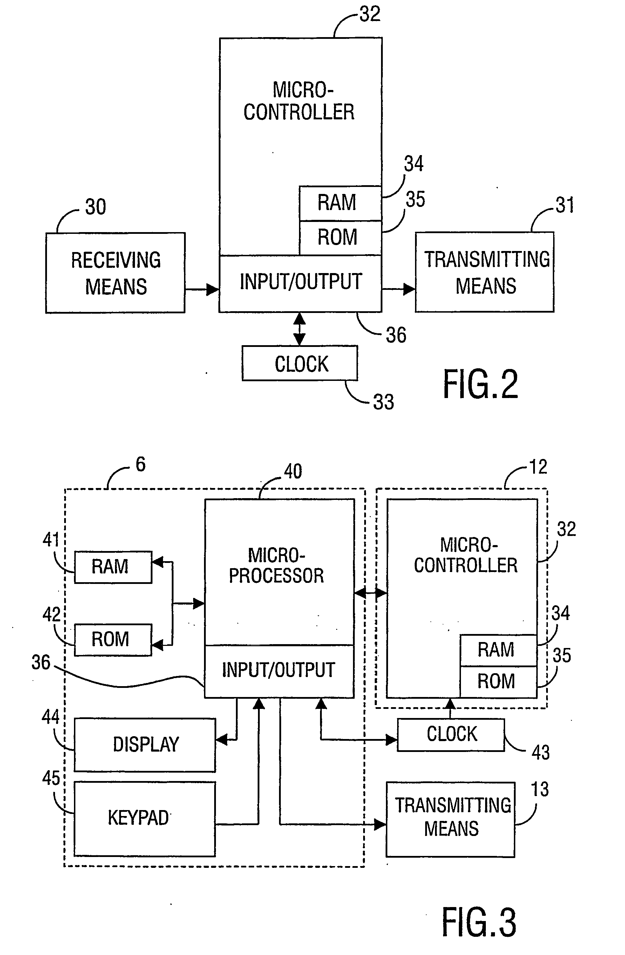

Fig. 2 shows an embodiment of the system of the present invention with a schematic diagram of the processor that could be embedded in the coding or decoding device.

The coding and decoding devices can be implemented separately from the remote control device and controllable devices. In this case, the coding device may include receiving means for obtaining the user-specified command from the remote control device, and the decoding device may include transmitting means for supplying the user-specified command to the controllable device. However, there is a requirement that said receiving means of the coding device can communicate with the transmitting means of the remote control device and said transmitting means of the decoding device can communicate with the receiving means of the controllable device.

In this way, the coding or decoding devices can be realized as is shown in Fig. 2. The embodiment comprises receiving means 30, transmitting means 31, a microcontroller 32 and a clock 33. The microcontroller 32 has an embedded random access memory 34 and an embedded read-only memory 35, which is used for program storage. The microcontroller 32 could implement the coding means of the coding device or the decoding means of the decoding device. Depending on the first or second implementation, the coding means of the coding device or the decoding means of the decoding device can be realized. When the coding means is realized, an input/output function 36, the receiving means 30 and the transmitting means 31 are adapted to receive the user-specified command from the remote control device and to transmit the user-specified command and selected device identifier. When the decoding means is realized, the input/output function 36, the receiving means 30 and the transmitting means 31 are adapted to receive the user-specified command and the device identifier from the coding device and to transmit the user-specified command to the controllable device. Additionally, the microcontroller 32 can be equipped with the display, the keypad and other communication means. The blocks in Fig. 2 are well known in the prior art and are not further discussed herein.

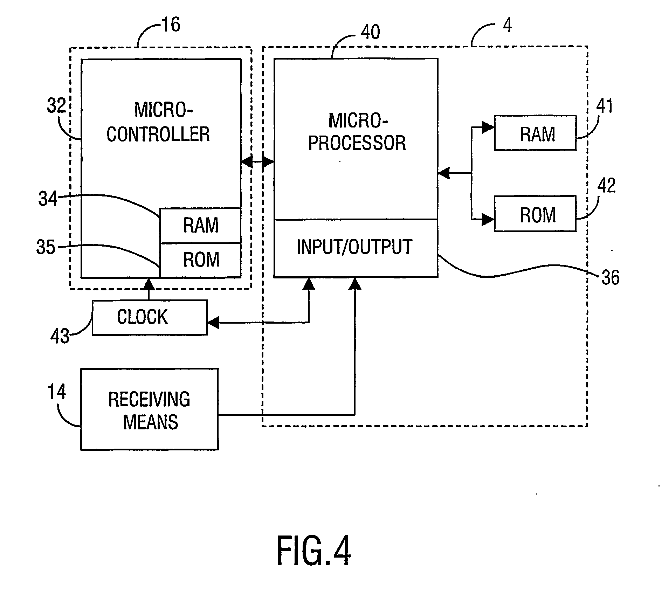

Figure 3 shows an example, in which a schematic of the remote control device and coding device with a combined transmitting means is shown. Figure 4 shows a schematic of the controllable device and decoding device with a combined receiving means.

Fig.3 shows the coding device comprising the coding means 12, the transmitting means 13 and a clock 43. The microcontroller 32 has the embedded random access memory 34 and the embedded read only memory 35, which is used for program storage. The remote control device 6 can be realized with a microprocessor 40, a random access memory 41, a read only memory 42, the clock 43, a display 44, a keypad 45 and the transmitting means 13. The remote control device and the coding device could advantageously share the transmitting means 13 and the clock 43. Both the microprocessor 40 and microcontroller 32 can read the clock 43. The transmitting means 13 is used for transmitting the user-specified command and the device identifier.

The example depicted in Fig.4 comprises the controllable device and the decoding device with the combined receiving means 14. Said decoding device comprises the decoding means 16, the receiving means 14 and the clock 43. The microcontroller 32 has the embedded random access memory 34 and the embedded read only memory 35, which is used for program storage. The controllable device 4 can comprise the microprocessor 40, the random access memory 41, the read only memory 42, the clock 43 and the receiving means 14. The controllable device and the decoding device could advantageously share the receiving means 14 and the clock 43. Both the microprocessor 40 and microcontroller 32 can read the clock 43. The receiving means 14 is used for receiving the user-specified command and the device identifier. Further details of the internal design of the examples shown in Fig.3,4 will be apparent to people skilled in the art.

An alternative to having the microcontroller 32, which can implement the coding or decoding means, is to build the coding and decoding functions directly into the program stored in the read only memory 42. This would eliminate the need for the microcontroller 32. Of course, other hardware to perform the coding or decoding functions can also be used.

The examples of Figures 3 and 4 with the combined transmitting means 13 and the combined receiving means 14 are not part of the invention as claimed.

The described system of the present invention allows cost-effective implementations with the additional advantages of using the infrared communication. The remote control device may be the conventional remote control device producing infrared signals that are received by the controllable device. The controllable devices can include televisions, VCRs or other electronic appliances or devices capable of receiving the infra signals. Accordingly, the coding device may be designed to receive the infrared signals produced by the remote control device. The infrared signals produced by the transmitting means of the decoding device can be adapted to transmit the same key characteristic (such as frequency and duration) as the infrared signals produced by the remote control device. Thus, said decoding device can communicate with the controlled device in the same way as the conventional remote control device would communicate with the controllable device.

Other implementations, which provide similar functions, could be substituted for the aforementioned implementations without departing from the scope of the present invention.

The method of the invention describes steps of operation of the system for remote control of at least two controllable devices: adding to the user-specified command a device identifier for identification of at least one of the controllable devices and transmitting the device identifier and the user-specified command.

Obviously, different frame structures may be used to compose a message including the device identifier and the user-specified command. For example, a header incorporating the device identifier may be added to the message with the user-specified command. Any digital, symbol or other format may be used for implementation of the device identifiers.

The method further comprises steps being executed at the decoding device: receiving the device identifier and the user-specified command; then extracting the device identifier, comparing said extracted device identifier with a further device identifier for identification of the controllable device. The method provides the steps of refraining from further operation with the received user-specified command if said identifiers do not match, and supplying the user-specified command to the controllable device if the identifiers do match.

The steps of receiving and sending the user-specified command or the device identifier and user-specified command could be modified accordingly for the system of the present invention. Thus, the step of supplying the user-specified command to the controllable device may comprise a step of transmitting the user-specified command to the controllable device. Also, the step of obtaining the user-specified command from the remote control device may comprise a step of receiving the user-specified command from the remote control device.

Before the afore-mentioned steps, the device identifiers have to be assigned to the associated controllable devices or to the groups of the controllable devices and then indicated in the decoding device. The device identifier could be indicated in the coding device with the help of the means for selecting the device identifiers, and in the decoding device with the help of the means for setting the further device identifiers associated with the controlled device. Various switches, buttons, keys, other hardware realizations or program products could implement these means for selecting and setting device identifiers.

The invention makes it possible to control many controllable devices by using the one remote control device with the means for selecting of the device identifiers. When each device identifier is associated with the only one controllable device, a user can select the associated device identifier at the remote control device and control this controllable device independently of the rest of them.

The remote control system of the present invention also allows the use of more than one remote control device equipped with the coding device. It is also possible to use the remote control devices equipped with the coding devices and the conventional remote control devices at the same time in the system.

The various program products may implement the functions of the system and method of the present invention and may be combined in several ways with the hardware or located in different devices. Variations and modifications of the described embodiment are possible within the scope of the inventive concept.

## Claims

1. A system for remote control of at least two controllable devices (4, 5), the system comprising a remote control device (6) with transmitting means for communicating a user-specified command produced by the remote control device, **characterized in that** the system comprises
a) a coding device (1) comprising:
- receiving means (11) for receiving the user-specified command from the remote control device, said receiving means of the coding device being arranged to communicate with transmitting means of the remote control device;
- a coding means (12) designed to add to the user-specified command a device identifier for identification of at least one of the controllable devices;
- a transmitting means (13) adapted to transmit the device identifier and the user- specified command;
b) a decoding device (2, 3) comprising:
- a receiving means (14, 15) adapted to receive the device identifier and the user- specified command;
- a decoding means (16, 17) designed to extract the device identifier; to compare said extracted device identifier with a further device identifier for identification of the controllable device; to refrain from further operation with the received user-specified command if said identifiers do not match;
- transmitting means (18, 19) for transmitting the user-specified command to the controllable device if the identifiers match.

2. A system as claimed in claim 1, wherein the transmitting means of the remote control device are designed to operate with infrared signals.

3. A coding device (1) for use in a system for remote control of at least two controllable devices (4, 5), the system comprising a remote control device (6) with transmitting means for communicating a user-specified command produced by the remote control device, the system comprising a decoding device (2, 3), the coding device comprising
- receiving means (11) for receiving the user-specified command from the remote control device, said receiving means of the coding device being arranged to communicate with transmitting means of the remote control device;
- a coding means (12) designed to add to the user-specified command a device identifier for identification of at least one of the controllable devices;
- a transmitting means (13) adapted to transmit the device identifier and the user- specified command to the decoding device.

4. A decoding device (2, 3) for use in a system for remote control of at least two controllable devices (4, 5), the system comprising a remote control device (6) with transmitting means for communicating a user-specified command produced by the remote control device, the system comprising a coding device (1), the decoding device comprising
- a receiving means (14, 15) adapted to receive a device identifier for identification of at least one of the controllable devices and the user- specified command from the coding device;
- a decoding means (16, 17) designed to extract the device identifier; to compare said extracted device identifier with a further device identifier for identification of the controllable device; to refrain from further operation with the received user-specified command if said identifiers do not match;
- transmitting means (18, 19) for transmitting the user-specified command to the controllable device if the identifiers match.

5. A method of remote control of at least two controllable devices (4, 5), the method comprising the step of
- communicating a user-specified command produced by a remote control device (6),
**characterized in that** the method comprises the further steps of:
- receiving, in a coding device (1), the transmitted user-specified command from the remote control device;
- adding, in the coding device, to the user-specified command a device identifier for identification of at least one of the controllable devices;
- transmitting, by the coding device, the device identifier and the user-specified command;
- receiving, in a decoding device (2, 3), the device identifier and the user-specified command;
- extracting, in the decoding device, the device identifier; comparing said extracted device identifier with a further device identifier for identification of the controllable device; refraining from further operation with the received user-specified command if said identifiers do not match;
- transmitting, from said decoding device, the user-specified command to the controllable device if the identifiers match.

## Patentansprüche

1. System zur Fernbedienung von mindestens zwei bedienbaren Einrichtungen (4, 5), wobei das System eine Fernbedieneinrichtung (6) mit Übertragungsmitteln zum Übermitteln eines benutzerspezifischen Befehls umfasst, der von der Fernbedieneinrichtung erzeugt wird, **dadurch gekennzeichnet, dass** das System Folgendes umfasst:
a) eine Codiereinrichtung (1) umfassend:
- Empfangsmittel (11) zum Empfangen des benutzerspezifischen Befehls von der Fernbedieneinrichtung, wobei die Empfangsmittel der Codiereinrichtung so angeordnet sind, dass sie mit den Übertragungsmitteln der Fernbedieneinrichtung kommunizieren,
- Codiermittel (12), die so ausgelegt sind, dass sie dem benutzerspezifischen Befehl eine Einrichtungskennung zur Erkennung von mindestens einer der bedienbaren Einrichtungen hinzufügen,
- Übertragungsmittel (13), die angepasst sind, um die Einrichtungskennung und den benutzerspezifischen Befehl zu übertragen,
b) eine Decodiereinrichtung (2, 3) umfassend:
- Empfangsmittel (14, 15), die angepasst sind, um die Einrichtungskennung und den benutzerspezifischen Befehl zu empfangen,
- Decodiermittel (16, 17), die so ausgelegt sind, dass sie die Einrichtungskennung extrahieren, die extrahierte Einrichtungskennung zur Erkennung der bedienbaren Einrichtung mit einer weiteren Einrichtungskennung vergleichen und keine weitere Operation mit dem empfangenen benutzerspezifischen Befehl durchführen, falls die Kennungen nicht übereinstimmen,
- Übertragungsmittel (18, 19) zum Übertragen des benutzerspezifischen Befehls an die bedienbare Einrichtung, falls die Kennungen übereinstimmen.

2. System nach Anspruch 1, in dem die Übertragungsmittel der Fernbedieneinrichtung so ausgelegt sind, dass sie mit Infrarotsignalen arbeiten.

3. Codiereinrichtung (1) zur Verwendung in einem System zur Fernbedienung von mindestens zwei bedienbaren Einrichtungen (4, 5), wobei das System eine Fernbedieneinrichtung (6) mit Übertragungsmitteln zum Übermitteln eines benutzerspezifischen Befehls umfasst, der durch die Fernbedieneinrichtung erzeugt wird, das System eine Decodiereinrichtung (2, 3) umfasst und die Decodiereinrichtung Folgendes umfasst:
- Empfangsmittel (11) zum Empfangen des benutzerspezifischen Befehls von der Fernbedieneinrichtung, wobei die Empfangsmittel der Codiereinrichtung so angeordnet sind, dass sie mit den Übertragungsmitteln der Fernbedieneinrichtung kommunizieren,
- Codiermittel (12), die so ausgelegt sind, dass sie dem benutzerspezifischen Befehl eine Einrichtungskennung zur Erkennung von mindestens einer der bedienbaren Einrichtung hinzufügen,
- Übertragungsmittel (13), die angepasst sind, um die Einrichtungskennung und den benutzerspezifischen Befehl an die Decodiereinrichtung übertragen.

4. Decodiereinrichtung (2, 3) zur Verwendung in einem System zur Fernbedienung von mindestens zwei bedienbaren Einrichtungen (4, 5), wobei das System eine Fernbedieneinrichtung (6) mit Übertragungsmitteln zur Übermittlung eines benutzerspezifischen Befehls umfasst, der durch die Fernbedieneinrichtung erzeugt wird, das System eine Codiereinrichtung (1) umfasst und die Codiereinrichtung Folgendes umfasst:
- Empfangsmittel (14, 15), die angepasst sind, um eine Einrichtungskennung zur Erkennung von mindestens einer der bedienbaren Einrichtungen und den benutzerspezifischen Befehl von der Codiereinrichtung zu empfangen,
- Decodiermittel (16, 17), die so ausgelegt sind, dass sie die Einrichtungskennung extrahieren, die extrahierte Einrichtungskennung zur Erkennung der bedienbaren Einrichtung mit einer weiteren Einrichtungskennung vergleichen und mit dem empfangenen benutzerspezifischen Befehl keine weitere Operation durchführen, falls die Kennungen nicht übereinstimmen,
- Übertragungsmittel (18, 19) zum Übertragen des benutzerspezifischen Befehls an die bedienbare Einrichtung, falls die Kennungen übereinstimmen.

5. Verfahren zur Fernbedienung von mindestens zwei bedienbaren Einrichtungen (4, 5), welches den Schritt des
- Übermittelns eines benutzerspezifischen Befehls umfasst, der von einer Fernbedieneinrichtung (6) erzeugt wird,
wobei das Verfahren **dadurch gekennzeichnet ist, dass** es die folgenden weiteren Schritte umfasst:
- in einer Codiereinrichtung (1) Empfangen des übertragenen benutzerspezifischen Befehls von der Fernbedieneinrichtung,
- in der Codiereinrichtung Hinzufügen einer Einrichtungskennung zum benutzerspezifischen Befehl, zur Erkennung von mindestens einer der bedienbaren Einrichtungen,
- Übertragen der Einrichtungskennung und des benutzerspezifischen Befehls durch die Codiereinrichtung,
- Empfangen der Einrichtungskennung und des benutzerspezifischen Befehls in einer Decodiereinrichtung (2, 3),
- Extrahieren der Einrichtungskennung in der Decodiereinrichtung, Vergleichen der extrahierten Einrichtungskennung mit einer weiteren Einrichtungskennung zur Erkennung der bedienbaren Einrichtung und Durchführen keiner weiteren Operation mit dem empfangenen benutzerspezifischen Befehl, falls die Kennungen nicht übereinstimmen,
- Übertragen des benutzerspezifischen Befehls von der Decodiereinrichtung an die bedienbare Einrichtung, falls die Kennungen übereinstimmen.

## Revendications

1. Système pour commander à distance au moins deux dispositifs pouvant être commandés (4, 5), le système comprenant un dispositif de télécommande (6) pourvu de moyens d'émission pour transmettre une commande spécifiée par l'utilisateur produite par le dispositif de télécommande, **caractérisé en ce que** le système comprend :
a) un dispositif de codage (1) comprenant :
- des moyens de réception (11) pour recevoir la commande spécifiée par l'utilisateur du dispositif de télécommande, lesdits moyens de réception du dispositif de codage étant à même de communiquer avec des moyens d'émission du dispositif de télécommande ;
- des moyens de codage (12) conçus pour ajouter à la commande spécifiée par l'utilisateur un identificateur de dispositif pour identifier au moins un des dispositifs pouvant être commandés ;
- des moyens d'émission (13) à même de transmettre l'identificateur de dispositif et la commande spécifiée par l'utilisateur ;
b) un dispositif de décodage (2, 3) comprenant :
- des moyens de réception (14, 15) à même de recevoir l'identificateur de dispositif et la commande spécifiée par l'utilisateur ;
- des moyens de décodage (16, 17) conçus pour extraire l'identificateur de dispositif, pour comparer ledit identificateur de dispositif extrait à un autre identificateur de dispositif pour identifier le dispositif pouvant être commandé, pour empêcher une nouvelle exécution de la commande spécifiée par l'utilisateur reçue si lesdits identificateurs ne correspondent pas ;
- des moyens d'émission (18, 19) pour transmettre la commande spécifiée par l'utilisateur au dispositif pouvant être commandé si les identificateurs correspondent.

2. Système suivant la revendication 1, dans lequel les moyens d'émission du dispositif de télécommande sont conçus pour fonctionner avec des signaux infrarouges.

3. Dispositif de codage (1) à utiliser dans un système pour commander à distance au moins deux dispositifs pouvant être commandés (4, 5), le système comprenant un dispositif de télécommande (6) pourvu de moyens d'émission pour transmettre une commande spécifiée par l'utilisateur produite par le dispositif de télécommande, le système comprenant un dispositif de décodage (2, 3), le dispositif de codage comprenant :
- des moyens de réception (11) pour recevoir la commande spécifiée par l'utilisateur du dispositif de télécommande, lesdits moyens de réception du dispositif de codage étant à même de communiquer avec des moyens d'émission du dispositif de télécommande ;
- des moyens de codage (12) conçus pour ajouter à la commande spécifiée par l'utilisateur un identificateur de dispositif pour identifier au moins un des dispositifs pouvant être commandés ;
- des moyens d'émission (13) à même de transmettre l'identificateur de dispositif et la commande spécifiée par l'utilisateur au dispositif de décodage.

4. Dispositif de décodage (2, 3) à utiliser dans un système pour commander à distance au moins deux dispositifs pouvant être commandés (4, 5), le système comprenant un dispositif de télécommande (6) pourvu de moyens d'émission pour transmettre une commande spécifiée par l'utilisateur produite par le dispositif de télécommande, le système comprenant un dispositif de codage (1), le dispositif de décodage comprenant :
- des moyens de réception (14, 15) à même de recevoir un identificateur de dispositif pour identifier au moins un des dispositifs pouvant être commandés et la commande spécifiée par l'utilisateur du dispositif de codage ;
- des moyens de décodage (16, 17) conçus pour extraire l'identificateur de dispositif, pour comparer ledit identificateur de dispositif extrait à un autre identificateur de dispositif pour identifier le dispositif pouvant être commandé, pour empêcher une nouvelle exécution de la commande spécifiée par l'utilisateur reçue si lesdits identificateurs ne correspondent pas ;
- des moyens d'émission (18, 19) pour transmettre la commande spécifiée par l'utilisateur au dispositif pouvant être commandé si les identificateurs correspondent.

5. Procédé pour commander à distance au moins deux dispositifs pouvant être commandés (4, 5), le procédé comprenant l'étape suivante :
- la transmission d'une commande spécifiée par l'utilisateur produite par un dispositif de télécommande (6) ;
**caractérisé en ce que** le procédé comprend les étapes supplémentaires suivantes :
- la réception, dans un dispositif de codage (1), de la commande spécifiée par l'utilisateur transmise en provenance du dispositif de télécommande ;
- l'ajout, dans le dispositif de codage, à la commande spécifiée par l'utilisateur d'un identificateur de dispositif pour identifier au moins un des dispositifs pouvant être commandés ;
- la transmission, par le dispositif de codage, de l'identificateur de dispositif et de la commande spécifiée par l'utilisateur ;
- la réception, dans un dispositif de décodage (2, 3), de l'identificateur de dispositif et de la commande spécifiée par l'utilisateur ;
- l'extraction, dans le dispositif de décodage, de l'identificateur de dispositif, la comparaison dudit identificateur de dispositif extrait avec un autre identificateur de dispositif pour identifier le dispositif pouvant être commandé, le fait d'empêcher une nouvelle exécution de la commande spécifiée par l'utilisateur reçue si lesdits identificateurs ne correspondent pas ;
- la transmission, depuis ledit dispositif de décodage, de la commande spécifiée par l'utilisateur au dispositif pouvant être commandé si les identificateurs correspondent.
